# EUROPEAN PATENT SPECIFICATION

(11) **EP 4 046 886 B1**
(45) Date of publication and mention of the grant of the patent: **07.08.2024**
(21) Application number: 21211894.7
(22) Date of filing: 02.12.2021
(51) Int. Cl.: B60W 30/16, B60W 30/14, B60W 30/182, B60W 50/14

(54) **VEHICLE CONTROL SYSTEM**
FAHRZEUGSTEUERUNGSSYSTEM
SYSTÈME DE COMMANDE DE VÉHICULE

(30) Priority: 22.02.2021 JP 2021026270
(43) Date of publication of application: 24.08.2022
(73) Proprietor: Suzuki Motor Corporation, 432-8611 Hamamatsu-shi, Shizuoka (JP)
(72) Inventor: Nishizawa, Hiromitsu, 432-8611 Hamamatsu-shi, Shizuoka (JP)
(74) Representative: Henkel & Partner mbB

(56) References cited:
- DE-A1- 10 211 475
- DE-A1- 102006 043 091
- DE-A1- 102018 219 283
- FR-A1- 3 088 881
- US-A1- 2015 015 384
- US-A1- 2019 315 344
- US-A1- 2020 319 636

## Description

### [Technical Field]

The present invention relates to a vehicle control system capable of executing adaptive cruise control.

### [Background Art]

Vehicles, such as automotive vehicles, may be equipped with a vehicle control system capable of executing adaptive cruise control. In the adaptive cruise control, when a preceding vehicle is present in front of a vehicle, the vehicle is controlled to maintain an inter-vehicular distance between the vehicle and the preceding vehicle at a certain distance. Furthermore, in the adaptive cruise control, when no preceding vehicle is present in front of the vehicle, the vehicle is controlled to travel at a preset speed.

Examples of such a vehicle control system include a vehicle traveling control apparatus including: traveling condition acquiring means configured to acquire a traveling condition of the vehicle; environmental information acquiring means such as a camera configured to acquire environmental information around the vehicle; an acceleration and deceleration means configured to control acceleration and deceleration of the vehicle based on the traveling condition and the environmental information; and driver's condition acquiring means configured to acquire driving appropriateness condition of the driver, in which acceleration by the acceleration and deceleration means is disenabled when a condition of the driver that is inappropriate for driving is acquired by the driver's condition acquiring means. (For example, see Patent Literature 1)
DE 1 020 182 192 83 A1 discloses a method for controlling a motor vehicle comprising the steps of scanning an area in the direction of travel of the motor vehicle using a distance sensor; determining a distance to an object located in the scanned area; and determining a speed of the motor vehicle such that a predetermined minimum distance from the object is maintained. A maximum distance is determined within which the distance sensor can detect the object, and the determined speed is limited in such a way that a speed-dependent braking distance of the motor vehicle is less than the maximum distance.
FR 3 088 881 A1 discloses a method for managing an assisted driving mode of a motor vehicle, the assisted driving mode implementing an adaptive cruise control function, the method comprising the steps consisting in: when the adaptive cruise control function is initially activated and becomes unavailable, for example due to a technical failure, transmitting an alert message to the attention of the driver; emitting a first information message, informing the driver that a non-adaptive cruise control function, is available; activating the adaptive cruise function only if the driver gives instructions.

### [Citation List]

### [Patent Literature]

[Patent Literature 1] JP 2009-126358 A
[Patent Literature 2] DE 1 020 182 192 83 A1
[Patent Literature 3] FR 3 088 881 A1

### [Summary of Invention]

### [Problem to be Solved by the Invention]

However, in the example of the vehicle control system as described above, acceleration during the adaptive cruise control is disenabled only when the driver is in an inappropriate condition for driving. Therefore, even when visibility in front of the vehicle is poor because of rain, snow, fog, and the like, the adaptive cruise control may be continued. This is not preferable in terms of safety and a state of mind of the driver.

In view of such circumstances, it is desired for the vehicle control system to execute adaptive cruise control adequately in accordance with situations of poor visibility.

### [Means for Solving the Problems]

In order to solve the problem, there is provided a vehicle control system according to claim 1. The dependent claims are directed to different advantageous aspects of the invention.

### [Advantageous Effect of Invention]

In the vehicle control system according to the aspect, adaptive cruise control can be executed adequately according to the situation of poor visibility.

### [Brief Description of Drawings]

[Figure 1] Figure 1 is a configuration drawing of a vehicle (ego vehicle) equipped with a vehicle control system according to an embodiment.
[Figure 2] Figure 2 is a plan view schematically illustrating the vehicle and a preceding vehicle according to the embodiment.
[Figure 3] Figure 3 is a flowchart for explaining an example of a control method of the vehicle control system according to a first mode of the embodiment.
[Figure 4] Figure 4 is a flowchart for explaining an example of a control method of the vehicle control system according to a second mode of the embodiment.

### [Mode for Carrying Out the invention]

A vehicle control system as well as a vehicle equipped with the vehicle control system according to an embodiment will be described below. It should be noted that the vehicle equipped with the vehicle control system according to the present embodiment is an automotive vehicle. However, such a vehicle may also be a vehicle other than an automotive vehicle. In this specification, a left-side shall mean the left hand side with the vehicle facing forward and a right-side shall mean the right hand side with the vehicle facing forward.

### Schematic Description of Vehicle Control System and Vehicle

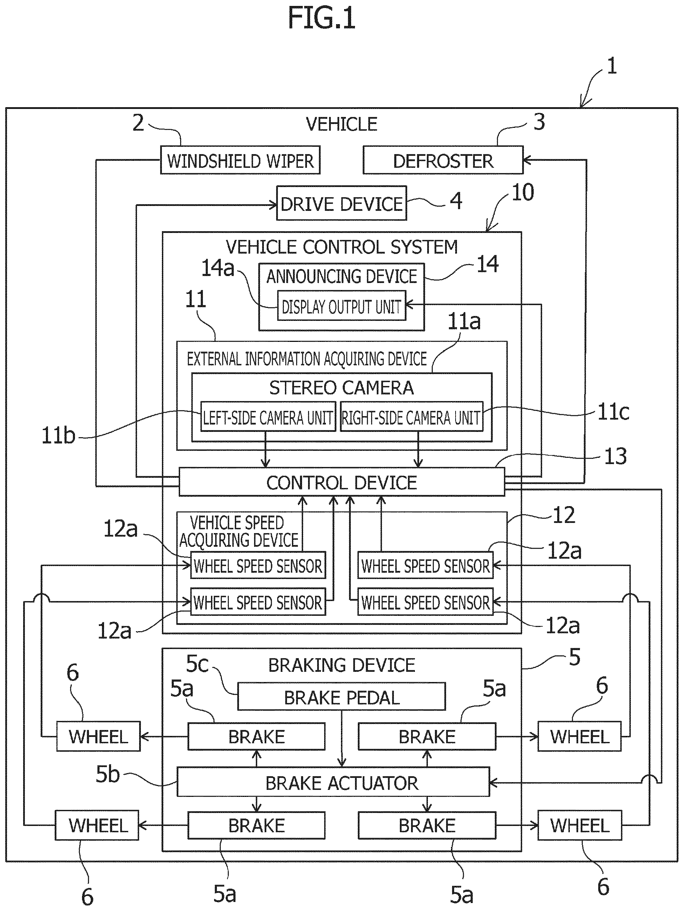

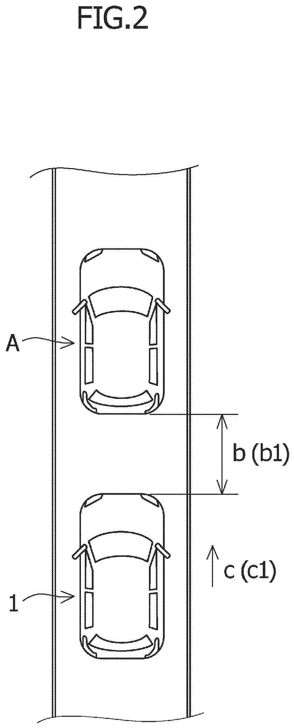

With reference to Figure 1 and Figure 2, a vehicle control system 10 and a vehicle 1 according to the present embodiment will be schematically described. In other words, the vehicle control system 10 and the vehicle 1 according to the present embodiment are schematically configured as described below.

The vehicle control system 10 includes an external information acquiring device 11 configured to be capable of acquiring presence of a vehicle (referred to as a preceding vehicle) A located in front of the vehicle 1, which may be referred to as an ego vehicle 1, and an inter-vehicular distance between the vehicle 1 and the preceding vehicle A. The vehicle control system 10 includes a vehicle speed acquiring device 12 configured to be capable of acquiring a traveling speed of the vehicle 1. The vehicle control system 10 includes a control device 13 configured to be capable of executing adaptive cruise control of the vehicle 1.

As illustrated in Figure 2, when the external information acquiring device 11 acquires information indicating the presence of the preceding vehicle A, the adaptive cruise control controls the vehicle 1 to maintain an acquired value b of the inter-vehicular distance (indicated by a double-headed arrow in Figure 2) acquired by the external information acquiring device 11 at a predetermined inter-vehicular distance set value b 1. Although not clearly illustrated, when the external information acquiring device 11 does not acquire the information indicating the presence of the preceding vehicle A, the adaptive cruise control controls the vehicle 1 to maintain an acquired value c of a traveling speed (indicated by a oneheaded arrow in Figure 2) acquired by the vehicle speed acquiring device 12 at a predetermined traveling speed set value c1.

Referring back to Figure 1 and Figure 2, the control device 13 is configured to be capable of calculating a degree of poor visibility for evaluating poor visibility in front of the vehicle 1. The control device 13 is configured to disenable acceleration of the vehicle 1 and to permit constant speed traveling of the vehicle 1 in the adaptive cruise control, when a calculated value d of the poor visibility degree calculated thereby is equal to or greater than a predetermined first poor visibility degree threshold d1.

In addition, the vehicle control system 10 and the vehicle 1 of the present embodiment may be schematically configured as described below. The vehicle control system 10 includes an announcing device 14 configured to announce that acceleration of the vehicle 1 is disenabled in the adaptive cruise control.

The control device 13 is configured to disenable acceleration of the vehicle 1 in the adaptive cruise control and at the same time disenable deceleration of the vehicle 1 in the adaptive cruise control. The announcing device 14 is configured to notify that the deceleration of the vehicle 1 is disenabled in the adaptive cruise control.

In the vehicle control system 10 according to a first mode of the present embodiment, the control device 13 is configured to disenable the adaptive cruise control when poor visibility duration in which the calculated value d of the poor visibility degree continues to be equal to or greater than the first poor visibility degree threshold d1 is equal to or longer than a predetermined poor visibility duration threshold e1. In the vehicle control system 10 according to a second mode of the present embodiment as an alternative of the first mode, the control device 13 is configured to disenable the adaptive cruise control when the calculated value d of the poor visibility degree is equal to or greater than a second poor visibility degree threshold d2 greater than the first poor visibility degree threshold d1.

Furthermore, in the vehicle control system 10 according to the present embodiment, the control device 13 is configured to activate at least one of a windshield wiper 2 and a defroster 3 when the calculated value d of the poor visibility degree is equal to or greater than the predetermined first poor visibility degree threshold d1. The external information acquiring device 11 is configured to generate the information indicating the presence of the preceding vehicle A and an acquired value b of the inter-vehicular distance from images of the preceding vehicle A captured by a stereo camera 11a.

### Details of Vehicle

Referring now to Figure 1, the vehicle 1 may be configured as described below. The windshield wiper 2 of the vehicle 1 is configured to be capable of wiping off water or ice adhering to a windshield (not shown) of the vehicle 1.

The defroster 3 of the vehicle 1 is configured to be capable of resolving frost formation, ice buildup, condensation, and the like on the windshield of the vehicle 1. For example, the defroster 3 may be configured to blow hot air onto the windshield. However, the defroster is not limited thereto.

The vehicle 1 includes a drive device 4 used for traveling the vehicle 1. For example, the drive device 4 may be an engine. However, the drive device may be a motor.

The vehicle 1 also includes a braking device 5 used for braking the vehicle 1. When the vehicle 1 is an automotive vehicle as in the present embodiment, the vehicle 1 typically has four wheels 6. The braking device 5 includes brakes 5a capable of braking respective wheels 6. The braking device 50 includes a brake actuator 5b capable of applying a brake fluid pressure to the brakes 5a to activate the respective brakes 5a.

The braking device 5 includes a brake pedal 5c configured to be operable by the driver. A braking force applied by the braking device 5 may be adjusted in accordance with a stroke of the brake pedal 5c.

### Details of External Information Acquiring Device

Referring to Figure 1 and Figure 2, the external information acquiring device 11 may be configured in detail as described below. The external information acquiring device 11 includes the stereo camera 11a described above. The stereo camera 11a is configured to be capable of capturing an image of the front area of the vehicle 1. The stereo camera 11a may include a left-side camera unit 11b and a right-side camera unit 11c located respectively on the left and right in the vehicle width direction.

The stereo camera 11a corresponds to a forward detecting unit 11a configured to be capable of detecting the preceding vehicle A located in front of the vehicle 1. A front windshield is located in front of the forward detecting unit 11a. The forward detecting unit 11a may detect the preceding vehicle A located in front of the vehicle 1 through the front windshield. The forward detecting unit 11a such as a stereo camera 11a is configured to be capable of detecting the inter-vehicular distance between the vehicle 1 and the preceding vehicle A. However, the forward detecting unit may be one other than the stereo camera. For example, the forward detecting unit may be a monocular camera, or the like.

The external information acquiring device 11 may acquire information indicating the presence of the preceding vehicle A when the forward detecting unit 11a detects the preceding vehicle A. The external information acquiring device 11 may acquire a detected value of the inter-vehicular distance detected by the forward detecting unit 11a as the acquired value b of the inter-vehicular distance described above.

### Details of Vehicle Speed Acquiring Device

Referring now to Figure 1, the vehicle speed acquiring device 12 may be configured as described below in detail. The vehicle speed acquiring device 12 includes wheel speed sensors 12a configured to be capable of detecting rotational speeds of the respective wheels 6 of the vehicle 1.

The vehicle speed acquiring device 12 is configured to calculate a traveling speed of the vehicle 1 based on the detected values of the rotational speeds of the wheels 6 detected by the respective wheel speed sensors 12a. The vehicle speed acquiring device 12 acquires a calculated value of the traveling speed calculated in this manner as the acquired value c of the traveling speed.

However, the vehicle speed acquiring device may have a vehicle speed sensor instead of the wheel speed sensors, and in this case, the vehicle speed acquiring device may acquire the detected value of the traveling speed detected by the vehicle speed sensor as the acquired value of the traveling speed.

### Details of Announcing Device

Referring now to Figure 1, the announcing device 14 may be configured as described below in detail. The announcing device 14 is configured to be capable of announcing that the adaptive cruise control is disenabled. The announcing device 14 includes a display output unit 14a capable of outputting visual information such as characters, graphics, lights and the like for notifying disenabling of acceleration and disenabling of deceleration of the vehicle 1 in the adaptive cruise control, and disenabling of the adaptive cruise control. The display output unit 14a corresponds to a display.

However, the announcing device may include, instead of or in addition to the display output unit, an audio output unit capable of outputting audio information for announcing disenabling of acceleration and disenabling of deceleration of the vehicle in the adaptive cruise control. In this case, the audio output unit may be a speaker or the like.

### Details of Control Device

Referring now to Figure 1 and Figure 2, the control device 13 may be configured as described below in detail. The control device 13 may control a drive force of the drive device 4 and a braking force of the braking device 5 to adjust the traveling speed of the vehicle 1. Furthermore, the control device 13 may control the drive force of the drive device 4 and the braking force of the braking device 5 for causing the vehicle 1 to travel at a constant speed.

When the external information acquiring device 11 acquires the information indicating the presence of the preceding vehicle A under normal adaptive cruise control, the control device 13 controls the drive force of the drive device 4 and the braking force of the braking device 5 to maintain the acquired value b of the inter-vehicular distance acquired by the external information acquiring device 11 at an inter-vehicular distance set value b1. When the external information acquiring device 11 does not acquire the information indicating the presence of the preceding vehicle A under the normal adaptive cruise control, the control device 13 controls the drive force of the drive device 4 and the braking force of the braking device 5 to maintain the acquired value c of the traveling speed acquired by the vehicle speed acquiring device 12 at a traveling speed set value c1.

The control device 13, when disenabling acceleration of the vehicle 1 in the adaptive cruise control, controls a drive force of the drive device 4 and a braking force of the braking device 5 to prevent acceleration of the vehicle 1. The control device 13, when disenabling acceleration of the vehicle 1 in the adaptive cruise control, causes the vehicle 1 to travel at a constant speed.

The control device 13, when disenabling deceleration of the vehicle 1 in the adaptive cruise control, controls a drive force of the drive device 4 and a braking force of the braking device 5 to prevent deceleration of the vehicle 1. The control device 13, when disenabling deceleration of the vehicle 1 in the adaptive cruise control, may change the inter-vehicular distance set value b1 so as to maintain the state in which the vehicle 1 follows the preceding vehicle A.

The control device 13 may calculate the poor visibility degree based on the luminance, shading, and the like of the images captured by the forward detecting unit 11a. In particular, the control device 13 may calculate the poor visibility degree based on the luminance, shading, and the like of a left-side image and a right-side image captured respectively by the left-side camera unit 11b and the right-side camera unit 11c of the stereo camera 11a. In this case, the control device 13 may change the first and second poor visibility degree thresholds d1, d2 in accordance with differences in luminance, shading, and the like between the left-side image and the right-side image captured respectively by the left-side camera unit 11b and the right-side camera unit 11c of the stereo camera 11a.

In the vehicle control system 10 of the present embodiment, the control device 13 may determine whether or not the calculated value d of the poor visibility degree is equal to or greater than the first poor visibility degree threshold d1.

In the vehicle control system 10 according to the first mode of the present embodiment, the control device 13 may calculate the poor visibility duration in which the calculated value d of the poor visibility degree continues to be equal to or greater than the first poor visibility degree threshold d1. The control device 13 may determine whether or not a calculated value e of the poor visibility duration calculated thereby is equal to or longer than the poor visibility duration threshold e1.

In the vehicle control system 10 according to the second mode of the present embodiment, when the calculated value d of the poor visibility degree is equal to or greater than the first poor visibility degree threshold d1, the control device 13 may determine whether or not the calculated value d of the poor visibility degree is equal to or greater than the predetermined second poor visibility degree threshold d2.

When the calculated value d of the poor visibility degree falls below the predetermined first poor visibility degree threshold d1 under conditions in which acceleration of the vehicle 1 is disenabled in the adaptive cruise control, the control device 13 executes the normal adaptive cruise control.

When acceleration of the vehicle 1 is disenabled in the adaptive cruise control, the control device 13 controls the announcing device 14 to announce this disenabled state. When deceleration of the vehicle 1 is disenabled in the adaptive cruise control, the control device 13 controls the announcing device 14 to announce this disenabled state. When the adaptive cruise control is disenabled, the control device 13 controls the announcing device 14 to announce this disabled state.

The control device 13 may determine whether or not it is raining outside the vehicle 1 based on an image captured by the forward detecting unit 11a of the external information acquiring device 11. For example, whether or not it is raining outside the vehicle 1 may be determined based on an amount of droplets adhering to the windshield in the image captured by the forward detecting unit 11a. The control device 13 may activate the windshield wiper 2 when it is raining outside the vehicle 1. For example, a condition when it is raining outside the vehicle 1 may correspond to a condition when the amount of droplets adhering to the windshield in the image captured by the forward detecting unit 11a is such an amount that the visibility in front of the windshield is impaired.

The control device 13 may determine whether or not the windshield is fogged based on the image captured by the forward detecting unit 1 1a of the external information acquiring device 11. The control device 13 may activate the defroster 3 when the windshield is fogged. For example, a condition in which the windshield is fogged may correspond to a condition in which the windshield in the image captured by the forward detecting unit 11a is fogged so much that the visibility is blocked in front of the windshield.

When it is raining outside the vehicle 1, the control device 13 may change the first poor visibility degree threshold d1. When the windshield is fogged, the control device 13 may change the first poor visibility degree threshold d1.

Furthermore, the control device 13 may differentiate the first poor visibility degree threshold d1 when it is raining outside the vehicle 1 from the first poor visibility degree threshold d1 when the windshield is fogged. However, the control device may substantially equalize the first poor visibility degree threshold when it is raining outside the vehicle and the first poor visibility degree threshold when the windshield is fogged.

### Controlling Method of Vehicle Control System

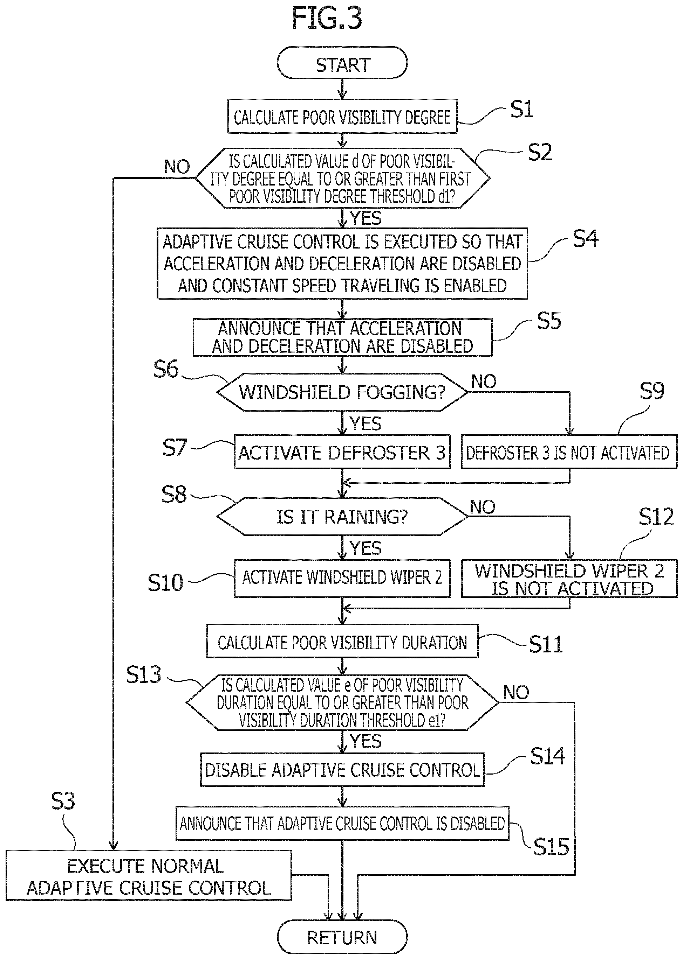

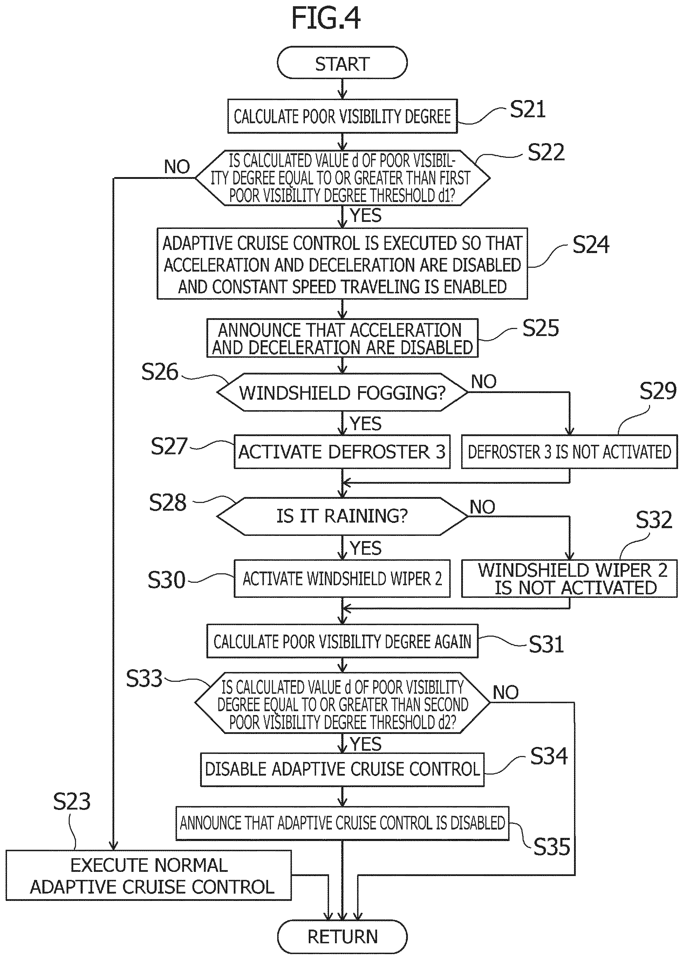

Referring now to Figure 3 and Figure 4, examples of a controlling method of the vehicle control system 10 according to the first and second modes of the present embodiment will be described. Referring first to Figure 3, an example of the controlling method of the vehicle control system 10 according to the first mode of the present embodiment will be described. A poor visibility degree is calculated (Step S1). Whether or not the calculated value d of the poor visibility degree is equal to or greater than the first poor visibility degree threshold d1 is determined (Step S2).

When the calculated value d of the poor visibility degree is below the first poor visibility degree threshold d1 (NO), the normal adaptive cruise control is executed (Step S3). Then, the procedure goes back to Step S1. When the calculated value d of the poor visibility degree is equal to or greater than the first poor visibility degree threshold d1 (YES), the adaptive cruise control is executed to disenable acceleration and deceleration of the vehicle 1 and to enable constant speed traveling of the vehicle 1 (Step S4).

The announcing device 14 announces that acceleration and deceleration of the vehicle 1 is disenabled in the adaptive cruise control (Step S5). Whether or not the windshield of the vehicle 1 is fogged is determined (Step S6).

When the windshield of the vehicle 1 is fogged (YES), the defroster 3 is activated (Step S7). Then, whether or not it is raining outside the vehicle 1 is determined (Step S8). When the windshield of the vehicle 1 is not fogged (NO), the defroster 3 is not activated (Step S9). Then, whether or not it is raining outside the vehicle 1 is determined (Step S8).

When it is raining outside the vehicle 1 (YES), the windshield wiper 2 is activated (Step S10). Then, the poor visibility duration in which the calculated value d of the poor visibility degree continues to be equal to or greater than the first poor visibility degree threshold d1 is calculated (Step S11). When it is not raining outside the vehicle 1 (NO), the windshield wiper 2 is not activated (Step S12). Then, the poor visibility duration is calculated (Step S11).

It is determined whether or not the calculated value e of the poor visibility duration is equal to or longer than the poor visibility duration threshold e1 (step S13). When the calculated value e of the poor visibility duration is less than the poor visibility duration threshold e1 (NO), the procedure returns to Step S1. When the calculated value e of the poor visibility duration is equal to or longer than the poor visibility duration threshold e1 (YES), the adaptive cruise control is disenabled (Step S14). The announcing device 14 announces that the adaptive cruise control is disenabled (Step S15). Then, the procedure goes back to Step S1.

Referring next to Figure 4, an example of the controlling method of the vehicle control system 10 according to the second mode of the present embodiment will be described. A poor visibility degree is calculated (Step S21). Whether or not the calculated value d of the poor visibility degree is equal to or greater than the first poor visibility degree threshold d1 is determined (Step S22).

When the calculated value d of the poor visibility degree is below the first poor visibility degree threshold d1 (NO), the normal adaptive cruise control is executed (Step S23). Then, the procedure goes back to Step S21. When the calculated value d of the poor visibility degree is equal to or greater than the first poor visibility degree threshold d1 (YES), the adaptive cruise control is executed to disenable acceleration and deceleration of the vehicle 1 and to enable constant speed traveling of the vehicle 1 (Step S24).

The announcing device 14 announces that acceleration and deceleration of the vehicle 1 are disenabled in the adaptive cruise control (Step S25). Whether or not the windshield of the vehicle 1 is fogged is determined (Step S26).

When the windshield of the vehicle 1 is fogged (YES), the defroster 3 is activated (Step S27). Then, whether or not it is raining outside the vehicle 1 is determined (Step S28). When the windshield of the vehicle 1 is not fogged (NO), the defroster 3 is not activated (Step S29). Then, whether or not it is raining outside the vehicle 1 is determined (Step S28).

When it is raining outside the vehicle 1 (YES), the windshield wiper 2 is activated (Step S30). The poor visibility degree is then calculated again (Step S31). When it is not raining outside the vehicle 1 (NO), the windshield wiper 2 is not activated (Step S32). The poor visibility degree is then calculated again (Step S31).

Whether or not the calculated value d of the poor visibility degree is equal to or greater than the second poor visibility degree threshold d2 is determined (Step S33). When the calculated value d of the poor visibility degree is below the second poor visibility degree threshold d2 (NO), the procedure goes back to Step S21. When the calculated value d of the poor visibility degree is equal to or greater than the second poor visibility degree threshold d2 (YES), the adaptive cruise control is disenabled (Step S34). The announcing device 14 announces that the adaptive cruise control is disenabled (Step S35). Then, the procedure goes back to Step S21.

As described thus far, the vehicle control system 10 according to the present embodiment includes: an external information acquiring device 11 configured to be capable of acquiring the presence of a preceding vehicle A located in front of the vehicle 1 and an inter-vehicular distance between the vehicle 1 and the preceding vehicle A; a vehicle speed acquiring device 12 configured to be capable of acquiring a traveling speed of the vehicle 1; and a control device 13 configured to be capable of executing adaptive cruise control of the vehicle 1. In the adaptive cruise control, the vehicle 1 is controlled to maintain an acquired value b of the inter-vehicular distance acquired by the external information acquiring device 11 at a predetermined inter-vehicular distance set value b1 when the external information acquiring device 11 acquires information indicating the presence of the preceding vehicle A, and the vehicle 1 is controlled to maintain an acquired value c of the traveling speed acquired by the vehicle speed acquiring device 12 at a predetermined traveling speed set value c1 when the external information acquiring device 11 does not acquire the information indicating the presence of the preceding vehicle. The control device 13 is configured to be capable of calculating the poor visibility degree for evaluating poor visibility in front of the vehicle 1, and the control device 13 is configured to disenable acceleration of the vehicle 1 and permit constant speed traveling of the vehicle 1 in the adaptive cruise control, when the calculated value d of the poor visibility degree calculated thereby is equal to or greater than a predetermined first poor visibility degree threshold d1.

In general, if the ego vehicle accelerates during execution of the adaptive cruise control in a state in which rain, snow, fog, and the like causes poor visibility in front of the ego vehicle, and thus recognition of the preceding vehicle is difficult, there may be a risk that, in terms of safety, the ego vehicle approaches the preceding vehicle rapidly, and in addition, in terms of psychology of the driver, the driver who foresees this risk may become anxious. On the other hand, frequent switching between disenabling of the adaptive cruise control and cancellation of such disenabling may cause discomfort to the driver.

For this reason, in the vehicle control system 10 of the present embodiment, acceleration of the vehicle 1 is disenabled when the poor visibility in front of the vehicle 1 occurs and recognition of the preceding vehicle A becomes difficult during execution of the adaptive cruise control. Therefore, in terms of safety, the risk of the rapid approach between the vehicle 1 and the preceding vehicle A may be reduced, while in terms of the psychology of the driver, the driver's anxiety may be alleviated. In addition, since the adaptive cruise control is not suddenly disenabled, frequent switching between disenabling of the adaptive cruise control and cancelling of the disenabling may be avoided, so that driver's discomfort may be avoided.

On the other hand, in the vehicle control system 10 according to the present embodiment, constant speed traveling of the vehicle 1 is enabled, so that the normal adaptive cruise control in the absence of the preceding vehicle A may be executed. Therefore, the adaptive cruise control is not unnecessarily limited. Therefore, according to the situation of poor visibility, the adaptive cruise control may be executed adequately.

The vehicle control system 10 according to the present embodiment is provided with the announcing device 14 configured to announce that acceleration of the vehicle 1 is disenabled in the adaptive cruise control.

In such a vehicle control system 10, the driver may recognize that acceleration of the vehicle 1 is disabled in the adaptive cruise control, and in addition, the driver may be aware of a state in which the accuracy of information about the preceding vehicle A used for the adaptive cruise control is reduced due to poor visibility in front of the vehicle 1. Therefore, the driver may be prompted to proactively operate the brake pedal 5c in consideration of the possibility of rapid approach of the vehicle 1 to the preceding vehicle A, and furthermore, be prompted to operate the windshield wiper 2 or the defroster 3 to solve the poor visibility through the windshield.

In the vehicle control system 10 according to the present embodiment, the control device 13 is configured to disenable acceleration of the vehicle 1 in the adaptive cruise control and at the same time disenable deceleration of the vehicle 1 in the adaptive cruise control.

In such a vehicle control system 10, the driver may be aware of the state in which the vehicle 1 is not decelerated during the execution of the adaptive cruise control without the driver operating the brake pedal 5c. Therefore, the driver may be encouraged to proactively operate the brake pedal 5c in consideration of the possibility of the rapid approach of the vehicle 1 to the preceding vehicle A, and furthermore, encouraged to operate the windshield wiper 2 or the defroster 3 to solve the poor visibility through the windshield.

In the vehicle control system 10 according to the present embodiment, the announcing device 14 is configured to announce that deceleration of the vehicle 1 is disenabled in the adaptive cruise control.

In such a vehicle control system 10, the driver may recognize that acceleration and deceleration of the vehicle 1 is disenabled in the adaptive cruise control and, in addition, the driver may be aware of a state in which the accuracy of information on the preceding vehicle A used for the adaptive cruise control is lowered due to poor visibility in front of the vehicle 1. Therefore, the driver may be prompted to proactively operate the brake pedal 5c in consideration of the risk of the rapid approach of the vehicle 1 to the preceding vehicle A, and furthermore, prompted to operate the windshield wiper 2 or the defroster 3 to solve the poor visibility through the windshield.

In the vehicle control system 10 according to the first mode of the present embodiment, the control device 13 is configured to disenable the adaptive cruise control when the poor visibility duration in which the calculated value d of the poor visibility degree continues to be equal to or greater than the first poor visibility degree threshold d1 is equal to or longer than a predetermined poor visibility duration threshold c1.

In such a vehicle control system 10, the driver is aware of poor visibility that may continue for a certain period of time and is further aware that the inter-vehicular distance and the traveling speed of the vehicle 1 may fluctuate unless the driver himself or herself operates an acceleration pedal (not illustrated) or the brake pedal 5c. Therefore, the driver may be encouraged to proactively operate the brake pedal 5c in consideration of the possibility of rapid approach of the vehicle 1 to the preceding vehicle A and may be encouraged to operate the acceleration pedal for preventing rapid deceleration of the vehicle 1. The driver may also be encouraged to operate the windshield wiper 2 and the defroster 3 to solve poor visibility through the windshield.

In the vehicle control system 10 according to the second mode of the present embodiment, the control device 13 is configured to disenable the adaptive cruise control when the calculated value d of the poor visibility degree is equal to or greater than the second poor visibility degree threshold d2 greater than the first poor visibility degree threshold d1.

In such a vehicle control system 10, the driver is aware of the occurrence of extreme poor visibility and is further aware that the inter-vehicular distance and the traveling speed of the vehicle 1 may fluctuate unless the driver himself or herself operates the acceleration pedal or the brake pedal 5c. Therefore, the driver may be encouraged to proactively operate the brake pedal 5c in consideration of the possibility of rapid approach of the vehicle 1 to the preceding vehicle A and may be encouraged to operate the acceleration pedal for preventing rapid deceleration of the vehicle 1. The driver may also be encouraged to operate the windshield wiper 2 and the defroster 3 for resolving poor visibility through the windshield.

In the vehicle control system 10 according to the present embodiment, the control device 13 is configured to activate at least one of the windshield wiper 2 and the defroster 3 when the calculated value d of the poor visibility degree is equal to or greater than the predetermined first poor visibility degree threshold d1.

In such a vehicle control system 10, in a state in which poor visibility occurs in front of the vehicle 1 and thus recognition of the preceding vehicle A becomes difficult, if the poor visibility through the windshield may be solved, the normal adaptive cruise control may be continued. Therefore, according to the situation of poor visibility, the adaptive cruise control may be executed adequately.

In the vehicle control system 10 according to the present embodiment, the external information acquiring device 11 is configured to generate the information indicating the presence of the preceding vehicle A and the acquired value b of the inter-vehicular distance from images of the preceding vehicle A captured by the stereo camera 11a.

In such a vehicle control system 10, fogging of the windshield, droplets adhering to the windshield due to rain, and the like may easily be recognized from the images captured by the stereo camera 11a. Therefore, the control device 13 may calculate the poor visibility degree adequately from such images. In addition, the situation of poor visibility may be adequately evaluated based on the adequately calculated poor visibility degree, and the adaptive cruise control may be adequately executed according to the adequately evaluated situation of poor visibility.

### [Reference Signs List]

1... vehicle, ego vehicle, 2... windshield wiper, 3... defroster
10... vehicle control system, 11... external information acquiring device, 11a... stereo camera, forward detecting unit, 12... vehicle speed acquiring device, 13... control device, 14... announcing device
A... preceding vehicle
b... acquired value of inter-vehicular distance, b1... inter-vehicular distance set value
c... acquired value of traveling speed, c1... traveling speed set value
d... calculated value of poor visibility degree, d1... first poor visibility degree threshold, d2... second poor visibility degree threshold
e... calculated value of poor visibility duration, e1... poor visibility duration threshold

## Claims

1. A vehicle control system (10) comprising:
an external information acquiring device (11) configured to be capable of acquiring presence of a preceding vehicle (A) located in front of a vehicle (1) and an inter-vehicular distance between the vehicle (1) and the preceding vehicle (A) ;
a vehicle speed acquiring device (12) configured to be capable of acquiring a traveling speed of the vehicle (1); and
a control device (13) configured to be capable of executing adaptive cruise control of the vehicle (1),
in the adaptive cruise control, the vehicle (1) is controlled to maintain an acquired value of the inter-vehicular distance (b) acquired by the external information acquiring device (11) at a predetermined inter-vehicular distance set value when the external information acquiring device (11) acquires information indicating the presence of the preceding vehicle (A), and the vehicle (1) is controlled to maintain an acquired value of the traveling speed acquired by the vehicle speed acquiring device (12) at a predetermined traveling speed set value when the external information acquiring device (11) does not acquire the information indicating the presence of the preceding vehicle (1), wherein:
the control device (13) is configured to be capable of calculating a poor visibility degree (d) for evaluating poor visibility in front of the vehicle (1); and
the control device (13) is configured to disenable acceleration of the vehicle (1) and permit constant speed traveling of the vehicle (1) in the adaptive cruise control when a calculated value of the poor visibility degree (d) is equal to or greater than a predetermined first poor visibility degree threshold (d1).

2. The vehicle control system (10) according to claim 1, comprising
an announcing device (14) configured to announce that acceleration of the vehicle (1) is disenabled in the adaptive cruise control.

3. The vehicle control system (10) according to claim 1 or 2, wherein
the control device (13) is configured to disenable acceleration of the vehicle (1) in the adaptive cruise control and at the same time disenable deceleration of the vehicle (1) in the adaptive cruise control.

4. The vehicle control system (10) according to claim 3, wherein
the announcing device (14) is configured to announce that deceleration of the vehicle (1) is disenabled in the adaptive cruise control.

5. The vehicle control system (10) according to any one of claims 1 to 4, wherein
the control device (13) is configured to disenable the adaptive cruise control when a poor visibility duration (e) in which the calculated value of the poor visibility degree (d) continues to be equal to or greater than the first poor visibility degree threshold (d1) is equal to or longer than a predetermined poor visibility duration threshold (e1).

6. The vehicle control system (10) according to any one of claims 1 to 4, wherein
the control device (13) is configured to disenable the adaptive cruise control when the calculated value of the poor visibility degree (d) is equal to or greater than a second poor visibility degree threshold (d2) greater than the first poor visibility degree threshold (d1).

7. The vehicle control system (10) according to any one of claims 1 to 6, wherein
the control device (10) is configured to be capable of executing a visibility securing control that activates at least one of a windshield wiper (2) and a defroster (3) when the calculated value of the poor visibility degree (d) is equal to or greater than the predetermined first poor visibility degree threshold (d1).

8. The vehicle control system (10) according to any one of claims 1 to 7, wherein
the external information acquiring device (11) is configured to generate the information indicating the presence of the preceding vehicle (A) and the acquired value of the inter-vehicular distance (b) from images of the preceding vehicle (A) captured by a stereo camera (11a).

## Patentansprüche

1. Ein Fahrzeugsteuerungssystem (10) mit:
einer externen Informationserfassungsvorrichtung (11), die konfiguriert ist, um in der Lage zu sein, die Anwesenheit eines vorausfahrenden Fahrzeugs (A), das sich vor einem Fahrzeug (1) befindet, und einen Fahrzeugabstand zwischen dem Fahrzeug (1) und dem vorausfahrenden Fahrzeug (A) zu erfassen;
einer Fahrzeuggeschwindigkeitserfassungsvorrichtung (12), die konfiguriert ist, um in der Lage zu sein, eine Fahrgeschwindigkeit des Fahrzeugs (1) zu erfassen; und
einer Steuervorrichtung (13), die konfiguriert ist, um in der Lage zu sein, eine adaptive Geschwindigkeitssteuerung des Fahrzeugs (1) auszuführen,
wobei bei der adaptiven Geschwindigkeitssteuerung das Fahrzeug (1) so gesteuert wird, dass ein erfasster Wert des Fahrzeugabstands (b), der von der externen Informationserfassungsvorrichtung (11) erfasst wird, auf einem vorbestimmten Sollwert des Fahrzeugabstands beibehalten wird, wenn die externe Informationserfassungsvorrichtung (11) Informationen erfasst, die die Anwesenheit des vorausfahrenden Fahrzeugs (A) angeben, und das Fahrzeug (1) zum Beibehalten eines erfassten Werts der von der Fahrzeuggeschwindigkeitserfassungsvorrichtung (12) erfassten Fahrgeschwindigkeit auf einem vorbestimmten Fahrgeschwindigkeitssollwert gesteuert wird, wenn die externe Informationserfassungsvorrichtung (11) die die Anwesenheit des vorausfahrenden Fahrzeugs (1) angebende Information nicht erfasst, wobei:
die Steuervorrichtung (13) konfiguriert ist, um in der Lage zu sein, einen Schlechtsichtigkeitsgrad (d) zu berechnen, um eine schlechte Sicht vor dem Fahrzeug (1) zu bewerten; und
die Steuervorrichtung (13) konfiguriert ist, um die Beschleunigung des Fahrzeugs (1) zu deaktivieren und eine Fahrt des Fahrzeugs (1) mit konstanter Geschwindigkeit in der adaptiven Geschwindigkeitssteuerung zu ermöglichen, wenn ein berechneter Wert des Schlechtsichtigkeitsgrads (d) gleich oder größer als ein vorbestimmter erster Schlechtsichtigkeitsgrad-Schwellenwert (d1) ist.

2. Das Fahrzeugsteuerungssystem (10) gemäß Anspruch 1, das Folgendes aufweist
eine Ankündigungsvorrichtung (14), die konfiguriert ist, um anzukündigen, dass die Beschleunigung des Fahrzeugs (1) bei der adaptiven Geschwindigkeitssteuerung deaktiviert ist.

3. Das Fahrzeugsteuerungssystem (10) gemäß Anspruch 1 oder 2, wobei
die Steuervorrichtung (13) konfiguriert ist, um die Beschleunigung des Fahrzeugs (1) in dem adaptiven Geschwindigkeitssteuerung zu deaktivieren und gleichzeitig die Verzögerung des Fahrzeugs (1) in dem adaptiven Geschwindigkeitssteuerung zu deaktivieren.

4. Fahrzeug-Steuerungssystem (10) gemäß Anspruch 3, wobei
die Ankündigungsvorrichtung (14) konfiguriert ist, um anzukündigen, dass die Verzögerung des Fahrzeugs (1) in der adaptiven Geschwindigkeitssteuerung deaktiviert ist.

5. Fahrzeugsteuerungssystem (10) gemäß einem der Ansprüche 1 bis 4, wobei
die Steuervorrichtung (13) konfiguriert ist, um die adaptive Geschwindigkeitssteuerung zu deaktivieren, wenn eine Schlechtsichtdauer (e), in der der berechnete Wert des Schlechtsichtgrades (d) weiterhin gleich oder größer als der erste Schlechtsichtgrad-Schwellenwert (d1) ist, gleich oder länger als ein vorgegebener Schlechtsichtdauer-Schwellenwert (e1) ist.

6. Fahrzeugsteuerungssystem (10) gemäß einem der Ansprüche 1 bis 4, wobei
die Steuervorrichtung (13) konfiguriert ist, um die adaptiven Geschwindigkeitssteuerung zu deaktivieren, wenn der berechnete Wert des Schlechtsichtgrads (d) gleich oder größer als ein zweiter Schlechtsichtgrad-Schwellenwert (d2) ist, der größer als der erste Schlechtsichtgrad-Schwellenwert (d1) ist.

7. Fahrzeugsteuerungssystem (10) gemäß einem der Ansprüche 1 bis 6, wobei
die Steuervorrichtung (10) konfiguriert ist, um in der Lage zu sein, eine Steuerung zum Sichern der Sicht auszuführen, die zumindest einen Scheibenwischer (2) oder einen Entfroster (3) aktiviert, wenn der berechnete Wert des Schlechtsichtgrades (d) gleich oder größer als der vorbestimmte erste Schlechtsichtgrad-Schwellenwert (d1) ist.

8. Fahrzeug-Steuerungssystem (10) gemäß einem der Ansprüche 1 bis 7, wobei
die externe Informationserfassungsvorrichtung (11) konfiguriert ist, um die Informationen, die die Anwesenheit des vorausfahrenden Fahrzeugs (A) angeben, und den erfassten Wert des Fahrzeugabstands (b) aus Bildern des vorausfahrenden Fahrzeugs (A) zu erzeugen, die von einer Stereokamera (11a) erfasst wurden.

## Revendications

1. Système de commande de véhicule (10) comprenant :
un dispositif d'acquisition d'informations externe (11) configuré pour pouvoir acquérir la présence d'un véhicule précédent (A) qui se trouve en face d'un véhicule (1) et une distance inter-véhiculaire entre le véhicule (1) et le véhicule précédent (A) ;
un dispositif d'acquisition de vitesse de véhicule (12) configuré pour pouvoir acquérir une vitesse de déplacement du véhicule (1) ;
et
un dispositif de commande (13) configuré pour pouvoir exécuter une régulation de vitesse adaptive du véhicule (1),
avec la régulation de vitesse adaptive, le véhicule (1) est contrôlé afin de maintenir une valeur acquise de la distance inter-véhiculaire (b) acquise par le dispositif d'acquisition d'informations externe (11) à une valeur définie de distance inter-véhiculaire lorsque le dispositif d'acquisition d'informations externe (11) acquière des informations qui indiquent la présence du véhicule précédent (A), et le véhicule (1) est contrôlé afin de maintenir une valeur acquise de la vitesse de déplacement acquise par le dispositif d'acquisition de vitesse de véhicule (12) à une valeur définie de vitesse de déplacement prédéterminée lorsque le dispositif d'acquisition d'informations externe (11) n'acquière pas les informations qui indiquent la présence du véhicule précédent (1), dans lequel :
le dispositif de commande (13) est configuré pour pouvoir calculer un degré de mauvaise visibilité (d) destiné à évaluer une mauvaise visibilité en face du véhicule (1) ; et
le dispositif de commande (13) est configuré pour désactiver l'accélération du véhicule (1) et autoriser le déplacement à vitesse constante du véhicule (1) avec la régulation de vitesse adaptive lorsqu'une valeur calculée du degré de mauvaise visibilité (d) est égale ou supérieure à un premier seuil de degré de mauvaise visibilité prédéterminé (d1).

2. Système de commande de véhicule (10) selon la revendication 1, comprenant
un dispositif d'annonce (14) configuré pour annoncer que l'accélération du véhicule (1) est désactivée en mode de régulation de vitesse adaptive.

3. Système de commande de véhicule (10) selon la revendication 1 ou 2, dans lequel
le dispositif de commande (13) est configuré pour désactiver l'accélération du véhicule (1) en mode de régulation de vitesse adaptive et pour désactiver en même temps la décélération du véhicule (1) en mode de régulation de vitesse adaptive.

4. Système de commande de véhicule (10) selon la revendication 3, dans lequel
le dispositif d'annonce (14) est configuré pour annoncer que la décélération du véhicule (1) est désactivée en mode de régulation de vitesse adaptive.

5. Système de commande de véhicule (10) selon l'une quelconque des revendications 1 à 4, dans lequel
le dispositif de commande (13) est configuré pour désactiver la régulation de vitesse adaptive lorsqu'une durée de mauvaise visibilité (e) au cours de laquelle la valeur calculée du degré de mauvaise visibilité (d) continue à être égale ou supérieure au premier seuil de degré de mauvaise visibilité (d1) est égale ou supérieure à un seuil de durée de mauvaise visibilité prédéterminé (e1).

6. Système de commande de véhicule (10) selon l'une quelconque des revendications 1 à 4, dans lequel
le dispositif de commande (13) est configuré pour désactiver la régulation de vitesse adaptive lorsque la valeur calculée du degré de mauvaise visibilité (d) est égale ou supérieure à un deuxième seuil de degré de mauvaise visibilité (d2) supérieur au premier seuil de degré de mauvaise visibilité (d1).

7. Système de commande de véhicule (10) selon l'une quelconque des revendications 1 à 6, dans lequel
le dispositif de commande (10) est configuré pour pouvoir exécuter une commande de sécurisation de la visibilité qui active au moins l'un d'un essuie-glace de pare-brise (2) et d'un dégivreur (3) lorsque la valeur calculée du degré de mauvaise visibilité (d) est égale ou supérieure au premier seuil de degré de mauvaise visibilité prédéterminé (d1).

8. Système de commande de véhicule (10) selon l'une quelconque des revendications 1 à 7, dans lequel
le dispositif d'acquisition d'informations externe (11) est configuré pour générer les informations qui indiquent la présence du véhicule précédent (A) et la valeur acquise de la distance inter-véhiculaire (b) à partir d'images du véhicule précédent (A) capturées par une caméra stéréo (11a).
